# EUROPÄISCHE PATENTSCHRIFT

(11) **EP 0 512 315 B1**
(45) Veröffentlichungstag und Bekanntmachung des Hinweises auf die Patenterteilung: **20.09.1995**
(21) Anmeldenummer: 92106824.3
(22) Anmeldetag: 22.04.1992
(51) Int. Cl.: A62D 3/00, B09B 3/00, B01J 19/12

(54) **Verfahren und Vorrichtung zur Reinigung von schadstoffbehafteten Feststoffen**
Process and apparatus for decontaminating contaminated solids
Procédé et dispositif pour la désinfection des solides contaminés

(30) Priorität: 09.05.1991 DE 4115177
(43) Veröffentlichungstag der Anmeldung: 11.11.1992
(73) Patentinhaber: ULTRA SYSTEMS GMBH UV-OXIDATION, D-69123 Heidelberg (DE)
(72) Erfinder: Massholder, Karl F., Dr., W-6917 Altneudorf (DE); Werz, Wilfried, W-6905 Schriesheim (DE)
(74) Vertreter: Werner, Hans-Karsten, Dr.Dipl.-Chem.

(56) Entgegenhaltungen:
- DE-A- 2 437 110
- DE-A- 4 106 913
- NL-A- 9 001 210

## Beschreibung

Gegenstand der vorliegenden Erfindung ist zunächst ein Verfahren zur Reinigung von schadstoffbehafteten Feststoffen, insbesondere von Böden, durch Zerkleinern der Feststoffe und Entfernen der Schadstoffe. Weiterhin betrifft die Erfindung eine Vorrichtung zur Durchführung dieses Verfahrens.

Aus der DE-OS 39 03 549 ist bekannt, Schadstoffe, insbesondere halogenierte Kohlenwasserstoffe durch UV-Licht abzubauen. Dieses Verfahren ist zunächst einmal für Flüssigkeiten zur Anwendung gekommen. Prinzipiell geeignet ist es auch zur Behandlung von gasförmigen Effluenten, wie Industrieabgasen etc.

Die US-A-4,432,344 beschreibt ein Verfahren, bei dem Sonnenlicht gebündelt zum Abbau von Schadstoffen eingesetzt wird. Sofern Feststoffe behandelt werden sollen, sollen Mischvorrichtungen eingebaut werden. Es sind jedoch keine Vorrichtungen zum Zerkleinern der Feststoffe vorgesehen.

In dem DE-GM 87 04 276 ist eine Vorrichtung zur Entfernung von halogenierten Kohlenwasserstoffen aus damit verunreinigten natürlichen Wasservorkommen, dem Boden und/oder der Atmosphäre beschrieben, bestehend aus einem geschlossenen Gehäuse mit Durchströmungseinrichtungen für Luft und halogenierten Kohlwasserstoff enthaltendes Gasgemisch sowie UV-Lichtquellen, die als Bündel von mehreren röhrenförmigen UV-Strahlern angeordnet sind. Sofern Boden gereinigt werden soll, wird durch diesen ein Luftstrom gepumpt und das austretende Gemisch aus Luft und halogenierten Kohlenwasserstoffen in das Gerät eingeleitet.

In der Praxis sind nicht nur flüssige und/oder gasförmige Effluente kontaminiert, sondern sehr häufig auch Feststoffe. In erster Linie handelt es sich bei diesen Feststoffen um Böden, darüber hinaus jedoch auch um andere Feststoffe, wie Erze, Mineralien sowie pulverförmige Chemikalien und Zwischenprodukte. Die Verunreinigung dieser Feststoffe erfolgt meist unbeabsichtigt und sehr häufig sogar als Folge von Unfällen oder dem unbeabsichtigten Austreten der Verunreinigungen aus Lager- oder Transportbehältern. Bisher war es meist notwendig, diese Feststoffe auf Sondermülldeponien zu verbringen oder aber in sehr aufwendigen Verfahren mit Waschflüssigkeiten zu extrahieren.

Nachdem sich der Abbau von Schadstoffen in Gasen und Flüssigkeiten mit Hilfe von UV-Licht bewährt hat, bestand der Wunsch, diese Reinigungsmethode auch auf schadstoffbehaftete Feststoffe anzuwenden. Dieser erweiterten Anwendung stehen jedoch eine Reihe von unüberwindbar erscheinenden Schwierigkeiten im Wege, so daß die Fachwelt zunächst geglaubt hat, daß eine generelle Anwendung dieser Methode für Feststoffe überhaupt nicht in Erwägung gezogen werden könnte.

Die größte Schwierigkeit besteht darin, daß die Feststoffe im allgemeinen nicht durchlässig sind für UV-Licht, so daß ein Abbau der Schadstoffe nur an der der UV-Lichtquelle zugewandten Außenseite der Feststoffteilchen möglich ist. Bereits die Seitenflächen von Teilchen und insbesondere die Rückseite von Teilchen können dem UV-Licht nicht ohne weiteres ausgesetzt werden. Weiterhin ist es notwendig, daß nicht nur die oberste Schicht der Feststoffteilchen, sondern jedes Teilchen eines kontaminierten Feststoffes mit sämtlichen Seiten der Oberfläche dem UV-Licht ausgesetzt werden müßte. Insbesondere, wenn die Schadstoffe auch in das Innere der Feststoffe eingedrungen sind, ist es unbedingt erforderlich, die Feststoffe vor der Reinigung ausreichend zu zerkleinern, so daß sich die Schadstoffe ausschließlich oder zumindest nahezu ausschließlich an der Oberfläche der Teilchen befinden. Aber auch nach dieser Zerkleinerung schien die Reinigung von schadstoffbehafteten Feststoffen mit Hilfe von UV-Licht undurchführbar, insbesondere aus den oben dargelegten Gründen.

Es wurde jetzt gefunden, daß es dennoch möglich ist, die gestellte Aufgabe zu lösen, indem die zerkleinerten Feststoffe mechanisch aufgewirbelt, mit Luft durchblasen und mit UV-Licht bestrahlt werden, wobei der Luftstrom anschließend entstaubt und erneut mit UV-Licht bestrahlt wird.

Diese Kombination von Maßnahmen führt zu einem Abbau der an der Oberfläche der Feststoffteilchen haftenden Schadstoffe sowie zur teilweisen Aufnahme der Schadstoffe in den Luftstrom. Zur Beseitigung der Schadstoffe im Luftstrom ist es daher notwendig, auch diesen noch einer UV-Bestrahlung zu unterwerfen.

Außer einer ausreichenden Zerkleinerung und mechanischen Aufwirbelung ist es notwendig, den Luftstrom vor der erneuten Bestrahlung mit UV-Licht zu entstauben, da andernfalls der Abbau der Schadstoffe im Luftstrom unvollständig ist. Weiterhin führt der Staub im Luftstrom zu einer raschen Verschmutzung der UV-Lampen, so daß diese ihre Wirksamkeit verlieren. Vorzugsweise wird daher der Luftstrom vor dem Durchblasen durch die Feststoffe dazu verwendet, die UV-Lampen von Staub zu reinigen. Weiterhin ist es vorteilhaft, diesen Luftstrom zur Kühlung der UV-Lampen und/oder der aufgewirbelten zerkleinerten Feststoffe zu verwenden. Diese Maßnahme verhindert nicht nur lokale Überhitzungen sowie eine Verkürzung der Lebensdauer von UV-Lampen durch Überhitzung, sondern gestattet auch die Verfahrensbedingungen bezüglich der Durchschnittstemperaturen in dem System zu steuern und zu regeln.

Es hat sich weiterhin als zweckmäßig erwiesen, den Staubanteil des Luftstromes zu sammeln und zu den zerkleinerten Feststoffen zurückzuführen. Es ist zwar prinzipiell möglich, diesen Staubanteil separat aus dem Verfahren auszuschleusen und separat weiterzuverarbeiten. Diese zusätzlichen Maßnahmen sind aber nicht erforderlich, wenn eine Staubrückführung beispielsweise zum noch ungereinigten Teil der Feststoffe erfolgt.

Als besonders effektvoll hat sich erwiesen, den Luftstrom zumindest teilweise durch die zerkleinerten und mechanisch aufgewirbelten Feststoffe hindurchzusaugen. Durch diese Druckverminderung geht ein größerer Anteil der flüchtigen Verunreinigungen in den Luftstrom über und kann dort in an sich bekannter Weise mit Hilfe von UV-Licht entfernt werden.

Die Aufwirbelung kann zwar prinzipiell durch einen derartigen Luftstrom erfolgen. Ein derartiges Wirbelbett kann auch prinzipiell mit UV-Licht bestrahlt werden. Im allgemeinen wird dabei aber das Verhältnis von Feststoffmenge zu Luftmenge zu ungünstig. Vorzugsweise erfolgt daher die Aufwirbelung mit Hilfe von Rüttel- oder Vibrationsböden. Das Durchsaugen von Luft durch die so aufgewirbelten Feststoffe wird dabei vorzugsweise gewährleistet durch Zutrittsöffnungen, durch die die Luft gesogen werden kann. Prinzipiell ist es aber auch möglich, die hindurchzusaugende Luft nur von der Seite her zuzuführen und auf Zutrittsöffnungen in den Rüttel- oder Vibrationsböden zu verzichten.

Es hat sich als sinnvoll erwiesen, die Frischluft vor dem Eintritt in das System und damit in die zerkleinerten und aufgewirbelten Feststoffe zu filtrieren oder gar durch Waschen naß zu reinigen, damit nicht neue Verunreinigungen aus der Umgebung in die Feststoffe eingeschleppt werden. Auf alle Fälle ist es zu empfehlen, die mit UV-Licht nachbehandelte Luft vor dem Austritt in die Umwelt zu filtrieren und/oder sogar zu waschen, um eine unerwünschte Luftverschmutzung zu vermeiden.

In Abhängigkeit von der Art der Kontamination und der sonstigen Verfahrensbedingungen kann es sehr nützlich sein, auf die zerkleinerten und mechanisch aufgewirbelten Feststoffe Hilfschemikalien zu sprühen. Besonders bewährt hat sich hierfür in einigen Fällen Wasserstoffperoxid. In anderen Fällen hat auch das Aufsprühen von Essigsäure die Reinigungseffekte gesteigert. Als außerordentlich nützlich und technisch leicht durchführbar hat sich erwiesen, dem Luftstrom Ozon oder zusätzlichen Sauerstoff zuzumischen, da der Abbau der Schadstoffe bei der Bestrahlung durch UV-Licht eine aktivierte Oxidation darstellt und daher im erheblichen Maße Sauerstoff oder Ozon verbrauchen kann. Das erfindungsgemäße Verfahren kann prinzipiell chargenweise durchgeführt werden. Vorzugsweise arbeitet man jedoch kontinuierlich.

Die erfindungsgemäße Vorrichtung zur kontinuierlichen Durchführung des Verfahrens besteht im allgemeinen aus
a) Vorrichtungen zum groben und feinen Zerkleinern der Feststoffe,
b) einer als Luftschleuse ausgebildeten Eintrittsöffnung für die zerkleinerten Feststoffe,
c) einer Vorrichtung zur mechanischen Aufwirbelung der zerkleinerten Feststoffe,
d) einer Vorrichtung zum Durchblasen von Luft durch die zerkleinerten und aufgewirbelten Feststoffe,
e) einer Vorrichtung zur Bestrahlung der zerkleinerten und aufgewirbelten Feststoffe mit UV-Licht,
f) einer als Luftschleuse ausgebildeten Austrittsöffnung für die bestrahlten Feststoffe,
g) einer gegebenenfalls mit einem Filter versehenen Eintrittsöffnung für Frischluft,
h) einer Vorrichtung zur Entstaubung der durch die zerkleinerten, aufgewirbelten und bestrahlten Feststoffe austretenden Luft,
i) einer Vorrichtung zur Bestrahlung der entstaubten Luft mit UV-Licht,
j) einer Vorrichtung zum Absaugen der mit UV-Licht behandelten Luft,
k) gegebenenfalls einem Filter für die aus der Absaugung austretenden Abluft,
l) gegebenenfalls einem Wärmetauscher für die austretende Abluft,
m) gegebenenfalls einer Vorrichtung zum Besprühen der aufgewirbelten Feststoffe mit Hilfschemikalien,
n) gegebenenfalls einer Vorrichtung zur Zumischung von Ozon oder Sauerstoff zum Luftstrom,
o) gegebenenfalls einer Waschvorrichtung für die austretende Abluft.

Die Vorrichtung zur mechanischen Aufwirbelung der zerkleinerten Feststoffe ist vorzugsweise als Rüttel- oder Vibrationsboden ausgebildet und weist gegebenenfalls Bohrungen auf, die als Zutrittsöffnungen für Luft wirken.

Die Vorrichtung zur Entstaubung der durch die zerkleinerten, aufgewirbelten und bestrahlten Feststoffe austretenden Luft ist vorzugsweise als Zyklon ausgebildet. In solchen Fällen ist es auch besonders einfach, den Staubanteil aus der Luft zu den zerkleinerten Feststoffen zurückzuführen.

Um den Staubanteil in der Luft vor der Entstaubung so gering wie möglich zu halten, empfiehlt es sich, zumindest einige Zutrittsöffnungen für Luft oberhalb der aufgewirbelten Feststoffe anzuordnen. Vorzugsweise entstehen dabei turbulente Gegenströmungen gegen den langsameren Luftstrom, der aus den Böden austritt. In den meisten Fällen genügt aber die Entstaubung mit Hilfe eines Zyklons.

Es ist als wesentlicher Vorteil der Erfindung anzusehen, daß es möglich ist, zumindest die Teile von der Luftschleuse bis zur Zumischung von Ozon oder Sauerstoff zum Luftstrom zu einer kompakten Baueinheit zusammenzufassen und in einem mobilen Container unterzubringen. Ein derartiger mobiler Container muß dann nur noch mit herkömmlichen oder speziell entwickelten Vorrichtungen zum groben und feinen Zerkleinern der Feststoffe kombiniert werden. Insofern es sich um Feststoffe handelt, bei denen diese Schritte leicht und unkompliziert durchgeführt werden können, könnte man auch diese Aggregate noch in dem Container mit unterbringen. Genauso ist es prinzipiell möglich, in dem Container noch eine Waschvorrichtung für die austretende Luft unterzubringen. Generell ist es jedoch zweckmäßiger, hierfür eine zweite mobile Einheit einzusetzen, die je nach Art und Umfang der Kontamination einen größeren oder kleineren Wirkungsgrad aufweist und somit gewährleistet, daß die Umwelt nicht durch die Abluft erneut belastet wird.

Der Einsatz eines Wärmetauschers empfiehlt sich stets dann, wenn diese Wärme sinnvoll verwendet werden kann. In einigen Fällen kann es sogar sinnvoll sein, mit der so gewonnenen Abwärme die Frischluft vorzuwärmen, da diese dann ein erhöhtes Aufnahmevermögen für verdampfbare Kontaminationen aufweist. Handelt es sich jedoch um wärmeempfindliche Feststoffe, kann es statt dessen auch sinnvoll sein, die eintretende Frischluft zuvor zu kühlen. Die Energie zur Abkühlung der Frischluft kann dann aber ebenfalls aus der Abwärme des Wärmetauschers gewonnen werden.

Als UV-Lampen kommen prinzipiell alle handelsüblichen UV-Lampen in Frage, die auch jetzt schon für die Behandlung von flüssigen und gasförmigen Effluenten eingesetzt worden sind. Für die Bestrahlung der Feststoffe kann es sinnvoll sein, Sonderkonstruktionen einzusetzen, bei denen ein stärkerer Frischluftstrom so dirigiert wird, daß er eine wirksame Abkühlung und Reinigung der UV-Strahler bewirkt.

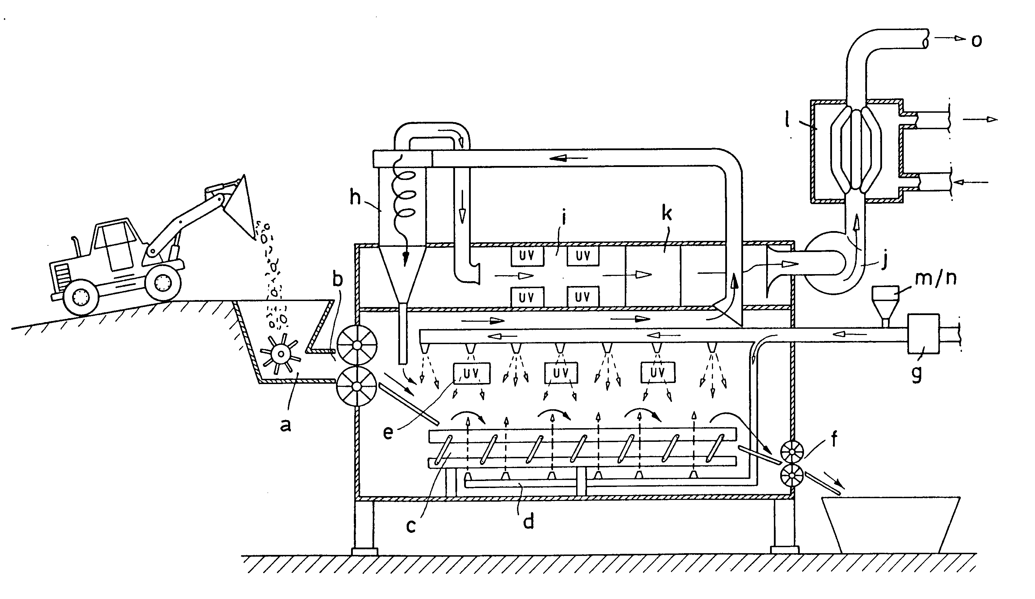

In der anliegenden Figur 1 ist eine erfindungsgemäß brauchbare Vorrichtung schematisch dargestellt. Diese Zeichnung zeigt weiterhin das Fließschema für die Zerkleinerten Feststoffe, die Frischluft und die Abluft. Schließlich deutet sie an, wo durch UV-Strahlung die aufgewirbelten Feststoffe und wo die vom Staub befreite Abluft der UV-Strahlung ausgesetzt werden.

## Patentansprüche

1. Verfahren zur Reinigung von schadstoffbehafteten Feststoffen durch Zerkleinern der Feststoffe und Entfernen der Schadstoffe, dadurch gekennzeichnet, daß die zerkleinerten Feststoffe mechanisch aufgewirbelt, mit Luft durchblasen und mit UV-Licht bestrahlt werden, wobei der Luftstrom anschließend entstaubt und erneut mit UV-Licht bestrahlt wird.

2. Verfahren gemäß Anspruch 1, dadurch gekennzeichnet, daß der Luftstrom zuvor zur Reinigung der UV-Lampen von Staub verwendet wird.

3. Verfahren gemäß Anspruch 1 oder 2, dadurch gekennzeichnet, daß der Luftstrom zur Kühlung der UV-Lampen und/oder der aufgewirbelten, zerkleinerten Feststoffe verwendet wird.

4. Verfahren gemäß einem der Ansprüche 1 bis 3, dadurch gekennzeichnet, daß der Staubanteil des Luftstromes zu den zerkleinerten Feststoffen zurückgeführt wird.

5. Verfahren gemäß einem der Ansprüche 1 bis 4, dadurch gekennzeichnet, daß der Luftstrom durch die zerkleinerten und mechanisch aufgewirbelten Feststoffe hindurchgesogen wird.

6. Verfahren gemäß einem der Ansprüche 1 bis 5, dadurch gekennzeichnet, daß die Luft vor dem Eintritt in die zerkleinerten, aufgewirbelten Feststoffe und/oder vor dem Austritt in die Umwelt filtriert und/oder gewaschen wird.

7. Verfahren gemäß einem der Ansprüche 1 bis 6, dadurch gekennzeichnet, daß auf die zerkleinerten und mechanisch aufgewirbelten Feststoffe Hilfschemikalien gesprüht werden.

8. Verfahren gemäß einem der Ansprüche 1 bis 7, dadurch gekennzeichnet, daß dem Luftstrom Ozon oder Sauerstoff zugemischt wird.

9. Vorrichtung zur Durchführung des Verfahrens gemäß einem der Ansprüche 1 bis 8 bestehend aus
a) Vorrichtungen zum groben und feinen Zerkleinern der Feststoffe,
b) einer als Luftschleuse ausgebildeten Eintrittsöffnung für die zerkleinerten Feststoffe,
c) einer Vorrichtung zur mechanischen Aufwirbelung der zerkleinerten Feststoffe,
d) einer Vorrichtung zum Durchblasen von Luft durch die zerkleinerten und aufgewirbelten Feststoffe,
e) einer Vorrichtung zur Bestrahlung der zerkleinerten und aufgewirbelten Feststoffe mit UV-Licht,
f) einer als Luftschleuse ausgebildeten Austrittsöffnung für die bestrahlten Feststoffe,
g) einer gegebenenfalls mit einem Filter versehenen Eintrittsöffnung für Frischluft,
h) einer Vorrichtung zur Entstaubung der durch die zerkleinerten, aufgewirbelten und bestrahlten Feststoffe austretenden Luft,
i) einer Vorrichtung zur Bestrahlung der entstaubten Luft mit UV-Licht,
j) einer Vorrichtung zum Absaugen der mit UV-Licht behandelten Luft,
k) gegebenenfalls einem Filter für die aus der Absaugung austretenden Abluft,
l) gegebenenfalls einem Wärmetauscher für die austretende Abluft,
m) gegebenenfalls einer Vorrichtung zum Besprühen der aufgewirbelten Feststoffe mit Hilfschemikalien,
n) gegebenenfalls einer Vorrichtung zur Zumischung von Ozon oder Sauerstoff zum Luftstrom,
o) gegebenenfalls einer Waschvorrichtung für die austretende Abluft.

10. Vorrichtung gemäß Anspruch 9, dadurch gekennzeichnet, daß die Vorrichtung c) als Rüttel- oder Vibrationsboden ausgebildet ist, der gegebenenfalls Zutrittsöffnungen für Luft besitzt.

11. Vorrichtung gemäß Anspruch 9 oder 10, dadurch gekennzeichnet, daß die Vorrichtung h) ein Zyklon ist, der den Staubanteil zu den zerkleinerten Feststoffen zurückführt.

12. Vorrichtung gemäß einem der Ansprüche 9 bis 11, dadurch gekennzeichnet, daß zumindest einige Zutrittsöffnungen für Luft oberhalb der aufgewirbelten Feststoffe angeordnet sind.

13. Vorrichtung gemäß einem der Ansprüche 9 bis 12, dadurch gekennzeichnet, daß zumindest die Teile b) bis n) in einem mobilen Container untergebracht sind.

## Claims

1. A process for cleaning polluted solids by crushing the solids and removing the pollutants, characterized in that the crushed solids are mechanically fluidized, blown through with air, and irradiated with UV light, the air flow subsequently being dedusted and irradiated with UV light again.

2. The process according to claim 1, characterized in that the air flow in advance is used for cleaning the UV lamps from dust.

3. The process according to claim 1 or 2, characterized in that the air flow is used for cooling the UV lamps and/or the fluidized, crushed solids.

4. The process according to any one of claims 1 to 3, characterized in that the dust proportion of the air flow is recycled to the crushed solids.

5. The process according to any one of claims 1 to 4, characterized in that the air flow is sucked through the crushed and mechanically fluidized solids.

6. The process according to any one of claims 1 to 5, characterized in that the air is filtered and/or washed prior to introduction into the crushed, fluidized solids and/or prior to discharge into the environment.

7. The process according to any one of claims 1 to 6, characterized in that auxiliary chemicals are sprayed onto the crushed and mechanically fluidized solids.

8. The process according to any one of claims 1 to 7, characterized in that ozone or oxygen is admixed with the air flow.

9. A device for operating the process claimed according to any one of claims 1 to 8, consisting of
a) devices for coarsely and finely crushing the solids,
b) a feed opening designed as an air lock for the crushed solids,
c) a device for mechanically fluidizing the crushed solids,
d) a device for blowing air through the crushed and fluidized solids,
e) a device for irradiating the crushed and fluidized solids with UV light,
f) a discharge opening designed as an air lock for the irradiated solids,
g) a fresh air feed opening optionally provided with a filter,
h) a device for dedusting the air exiting through the crushed, fluidized and irradiated solids,
i) a device for irradiating the dedusted air with UV light,
j) a device for sucking off the air treated with UV light,
k) an optional filter for the discharged air exiting from suction,
l) an optional heat exchanger for the exiting discharged air,
m) an optional device for spraying auxiliary chemicals onto the fluidized solids,
n) an optional device for admixing ozone or oxygen with the air flow,
o) an optional washing device for the exiting discharged air.

10. The device according to claim 9, characterized in that device c) is designed as a shaking or vibrating plate which optionally has air feed openings.

11. The device according to claims 9 or 10, characterized in that device h) is a cyclone which recycles the dust proportion to the crushed solids.

12. The device according to any one of claims 9 to 11, characterized in that at least a few air feed openings are arranged above the fluidized solids.

13. The device according to any one of claims 9 to 12, characterized in that at least the members b) to n) are accommodated in a mobile container.

## Revendications

1. Procédé de décontamination de solides contaminés par des matières polluantes, consistant à broyer lesdits solides et à éliminer les matières polluantes, caractérisé en ce que les solides broyés sont mis en turbulence de façon mécanique, traversés par un courant d'air et irradiés par un rayonnement ultra-violet, le courant d'air étant ensuite dépoussiéré et à nouveau exposé à un rayonnement ultra-violet.

2. Procédé selon la revendication 1 . caractérisé en ce que le courant d'air est utilisé préalablement pour le dépoussiérage des lampes UV.

3. Procédé selon l'une des revendications 1 ou 2, caractérisé en ce que le courant d'air est utilisé pour le réfroidissement des lampes UV et/ou des solides broyés et mis en turbulence.

4. Procédé selon les revendications 1 à 3, caractérisé en ce que les poussières contenues dans le courant d'air sont reconduites vers les solides broyés.

5. Procédé selon l'une des revendications 1 à 4, caractérisé en ce que le courant d'air est aspiré à travers les solides broyés et mis en turbulence par voie mécanique.

6. Procédé selon l'une des revendications 1 à 5, caractérisé en ce que l'air, avant de pénétrer dans les solides broyés et mis en turbulence et/ou avant de s'échapper vers l'environnement extérieur, est filtré et/ou lavé.

7. Procédé selon l'une des revendications, caractérisé en ce que des produits chimiques adjuvants sont vaporisés sur les solides broyés et mis en turbulence.

8. Procédé selon l'une des revendications 1 à 7, caractérisé en ce que de l'ozone ou de l'oxygène est mélangé additionnellement au courant d'air.

9. Dispositif pour la mise en oeuvre du procédé conforme à l'une des revendications 1 à 8, consistant en:
a) des dispositifs pour le broyage grossier et fin des solides,
b) un orifice d'entrée des solides broyés réalisé sous forme d'un sas à air,
c) un dispositif pour mettre les solides broyés mécaniquement en turbulence,
d) un dispositif pour souffler de l'air à travers les solides broyés et mis en turbulence,
e) un dispositif pour irradier les solides broyés et mis en turbulence par un rayonnement UV,
f) d'un orifice d'échappement des solides irradiés réalisé sous forme d'un sas à air.
g) un orifice d'entrée pour l'air frais, éventuellement également muni d'un filtre,
h) un dispositif pour le dépoussiérage de l'air s'échappant des solides broyés, mis en turbulence et irradiés,
i) un dispositif pour l'irradiation de l'air dépoussiéré par un rayonnement UV.
j) un dispositif pour l'aspiration de l'air traité par rayonnement UV.
k) éventuellement un filtre pour l'air s'échappant du dispositif d'aspiration,
l) éventuellement un échangeur de chaleur pour l'air d'échappement,
m) éventuellement un dispositif pour arroser les solides mis en turbulence avec des produits chimiques adjuvants,
n) éventuellement un dispositif pour ajouter de l'ozone ou de l'oxygène au courant d'air.
o) éventuellement un dispositif de lavage pour l'air d'échappement.

10. Dispositif selon la revendication 9, caractérisé en ce que le dispositif c) est conformé en fond vibrant, ou à secousses, ce fond étant également muni d'orifices d'entrée pour l'air.

11. Dispositif selon la revendication 9 ou 10, caractérisé en ce que le dispositif c) est un cyclone qui ramène les poussières vers les solides broyés.

12. Dispositif selon l'une des revendications 9 à 11, caractérisé en ce que, au dessus des solides mis en turbulence, sont disposés au moins quelques orifices d'entrée d'air.

13. Dispositif selon l'une des revendications 9 à 12, caractérisé en ce que au moins les parties b) à n) sont logés dans un conteneur mobile.
